# EUROPÄISCHE PATENTSCHRIFT

(11) **EP 4 542 111 B1**
(45) Veröffentlichungstag und Bekanntmachung des Hinweises auf die Patenterteilung: **18.03.2026**
(21) Anmeldenummer: 24190773.2
(22) Anmeldetag: 25.07.2024
(51) Int. Cl.: F21V 23/04, G01S 13/56, G08B 13/24, G01S 7/02

(54) **BEWEGUNGSMELDER UND DESSEN VERWENDUNG SOWIE ANORDNUNG MIT EINEM SOLCHEN**
MOTION DETECTOR AND USE THEREOF AND ARRANGEMENT HAVING SAME
DÉTECTEUR DE MOUVEMENT ET SON UTILISATION AINSI QU'ENSEMBLE COMPRENANT UN TEL DÉTECTEUR

(30) Priorität: 17.10.2023 DE 102023128380
(43) Veröffentlichungstag der Anmeldung: 23.04.2025
(73) Patentinhaber: Insta GmbH, 58509 Lüdenscheid (DE)
(72) Erfinder: Schönfeld, Christof, 58849 Herscheid (DE)
(74) Vertreter: Fobbe, Tobias

(56) Entgegenhaltungen:
- EP-B1- 2 079 166
- DE-A1- 102014 226 891
- DE-A1- 102019 122 612
- DE-U1- 29 722 430

## Beschreibung

Die Erfindung betrifft eine Anordnung gemäß Anspruch 1.

Des Weiteren betrifft die Erfindung eine Verwendung einer solchen Anordnung zur Detektion eines Outdoor-Bewegungsereignisses.

Vorbekannte Bewegungsmelder dienen beispielsweise dazu, Leuchten zu betätigen, wenn ein Bewegungsereignis detektiert wird. Hierzu weisen solche Bewegungsmelder ein Gehäuse sowie eine Schnittstelle zum Anschluss an eine Energieversorgung eines Gebäudes auf.

Regelmäßig sind vorbekannte Bewegungsmelder dazu mit ihrem Gehäuse an einer Gebäudeaußenwand angebracht (*www.steinel.de*/*de*/*leuchten-sensoren*/*produkte*/*sensoren*/*bewegungsmelder-daemmerungsschalter*/*bewegungsmelder-aussen*/*ir-180-ap-easy-066048.html*)*.* Die Detektion des Bewegungsereignisses kann dabei entweder über einen Infrarotsensor oder über einen Radarsensor erfolgen.

Nachteilig bei vorbekannte Bewegungsmeldern ist, dass diese einerseits durch ihre witterungsexponierte Anbringung an der Gebäudeaußenwand zu technischen Defekten, insbesondere durch das Eindringen von Feuchtigkeit, tendieren und andererseits optisch auffällig sind. Durch die optische Auffälligkeit wird nicht nur der optische Eindruck einer Gebäudeaußenwand ästhetisch gestört, sondern wird es potentiellen Einbrechern sogar ermöglicht, den Bewegungsmelder zu erkennen und damit auch zu entfernen. Hierdurch wird der durch einen Bewegungsmelder, der regelmäßig an eine Leuchte angeschlossen ist, um bei einer Detektion eines Bewegungsereignisses die Leuchte einzuschalten und den potentiellen Einbrecher zu verschrecken, erzielte Sicherheitsvorteil eingeschränkt.

Des Weiteren ist bei vorbekannten Bewegungsmeldern nachteilig, dass die Fassade regelmäßig verunreinigt wird, da Regen durch den auf der Fassade installierten Bewegungsmelder gebündelt und durch die Schwerkraft nach unten abgeleitet wird. Damit entstehen unerwünschte Verunreinigungen auf der Fassade, insbesondere einer Putzfassade.

DE 297 22 430 U1 offenbart einen unterputz installierten Bewegungsmelder, der durch einen Radarsensor eine Detektion eines Outdoor-Bewegungsereignisses vornimmt.

Ausgehend von diesem diskutierten Stand der Technik liegt der Erfindung die Aufgabe zugrunde, eine Anordnung mit einem Bewegungsmelder zu schaffen, die es einerseits ermöglicht, die Defektanfälligkeit bezüglich Witterungseinflüssen, insbesondere durch Feuchtigkeit, zu minimieren und gleichzeitig die optische Auffälligkeit auf einer Gebäudeaußenwand, insbesondere auch die Verunreinigung der Fassade, auf null abzusenken und etwaige Demontageversuche zu verunmöglichen, so dass der durch den Bewegungsmelder eigentlich bewirkte Sicherheitsvorteil nicht eliminiert werden kann.

Gelöst wird diese Aufgabe durch eine Anordnung gemäß Anspruch 1.

Der Kerngedanke der Erfindung besteht darin, dass der erfindungsgemäße Radarsensor zur Detektion eines Outdoor-Bewegungsereignisses auf besonders intelligente Art und Weise ausgenutzt wird, indem der erfindungsgemäße Bewegungsmelder vor Witterungseinflüssen und Demontageversuchen geschützt ist, indem der Bewegungsmelder so bemessen und ausgeführt ist, dass er zur Unterputz-Installation in einer Installationsdose, beispielsweise hinter einem elektrischen/elektronischen Installationsgerät, im Inneren eines Gebäudes geeignet ist. Hierzu kann die Dimensionierung des Gehäuses so ausgeführt sein, dass ein Unterbringen in einer typischen Installationsdose möglich ist und gleichzeitig der Radarsensor entsprechend ausgebildet sein, dass eine Sensierung etwaiger Bewegungsereignisse durch massive Außenwände möglich ist, insbesondere durch das Vorsehen eines entsprechend leistungsstarken UWB(ultrabreitband)-Senders als Radar-Sensor.

Durch die erfindungsgemäße Unterputz-Installation in einer Installationsdose im Gebäudeinneren wird nicht nur das aus dem Stand der Technik vorbekannte Problem der optischen Auffälligkeit gelöst, sondern auch die Defektanfälligkeit bezüglich Feuchtigkeit substantiell verringert. Als positiver weiterer Aspekt wird auch vermieden, dass an dem Bewegungsmelder Regen gebündelt abgeleitet wird, was im Stand der Technik regelmäßig zur Verschmutzung der Fassade führt. Dieser Aspekt stellt in der Praxis ein besonders ärgerliches Phänomen dar, da regelmäßig die gesamte Fassadenseite eines Gebäudes gestrichen werden muss, nur, weil sich Regenspuren unter dem an der Fassadenseite angebrachten Bewegungsmelder abzeichnen.

Gemäß einer besonders bevorzugten Ausgestaltung der Erfindung weist der Bewegungsmelder Fixierungselemente, insbesondere Krallen oder Federn, auf, die zur gleichbleibenden Lagefixierung des Bewegungsmelders in der Einbaulage innerhalb der Installationsdose geeignet sind. Hierdurch wird ein - insbesondere bezüglich Erschütterungen - gleichbleibend zuverlässiger Betrieb des Bewegungsmelders sichergestellt.

In einer weiteren Ausgestaltung der Erfindung weist der Bewegungsmelder der erfindungsgemäßen Anordnung einen Funksender auf, durch den eine Parametrierung über eine Applikation auf einem Endgerät durch einen Anwender ermöglicht wird.

Gemäß einer weiteren bevorzugten Ausgestaltung der Erfindung weist der Bewegungsmelder der erfindungsgemäßen Anordnung einen Funksender auf, durch den ein Aktor, beispielsweise eine Leuchte oder ein Lautsprecher, angesteuert wird.

Erfindungsgemäß ist das Gehäuse des Bewegungsmelders so ausgeführt, dass es zur Minimierung der Einbautiefe in eine durch die Rückseite des Installationsgerätes bereitgestellte Aufnahme - ein Großteil der bestehenden Installationsgeräte weisen rückseitige Vorsprünge auf, die eine Aufnahme bieten - eingesetzt ist. Hierdurch ist der erfindungsgemäße Bewegungsmelder auf einfache Art und Weise auch für die Installation in flache Installationsdosen (Tiefe ca. 40mm) durch die effektive Bauraumausnutzung geeignet, so dass der Einsatzbereich des Bewegungsmelders erweitert wird.

Ferner betrifft die Erfindung eine Verwendung einer solchen Anordnung zur Detektion eines Outdoor-Bewegungsereignisses durch eine Gebäudewand hindurch im Außenbereich, während der Bewegungsmelder als Unterputz-Installation in einer im Innenbereich eines Gebäudes angeordneten Installationsdose installiert ist.

Nachfolgend ist die Erfindung unter Bezugnahme auf die beigefügte Figur anhand eines Ausführungsbeispiels beschrieben. Es zeigt:

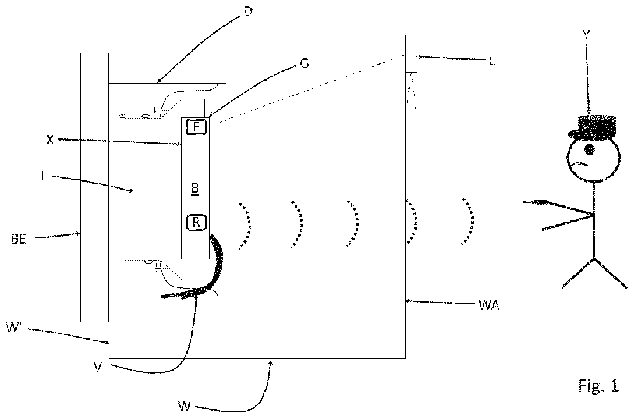

- **Fig. 1:**: eine schematische Querschnittsdarstellung einer erfindungsgemäßen Anordnung, die ein Bewegungsereignis detektiert.

Figur 1 zeigt eine schematische Querschnittsdarstellung einer erfindungsgemäßen Anordnung, die ein Bewegungsereignis Y im Außenbereich detektiert. Eine solche Anordnung umfasst eine Gebäudewand W mit einer Gebäudeinnenseite WI und einer Gebäudeaußenseite WA, eine auf der Gebäudeinnenseite WI installierten Installationsdose D, in der vorliegend ein elektrische/elektronisches Installationsgerät I mit einer Wippe BE, beispielsweise ein Schalter oder ein Taster, installiert ist. Ferner umfasst die Anordnung einen erfindungsgemäßen Bewegungsmelder B, der als Unterputz-Installation in einer Installationsdose D, vorliegend hinter dem elektrischen/elektronischen Installationsgerät I, angeordnet ist und mittels eines Radarsensors R durch die Gebäudewand W hindurch eine Detektion eines Outdoor-Bewegungsereignisses Y auf der Seite der Gebäudeaußenwand WA vornimmt. Dabei ist besonders vorteilhaft, dass Witterungseinflüsse wie Regen auf den Bewegungsmelder B und Regenspuren auf der Fassade der Gebäudeaußenseite WA genauso eliminiert sind, wie die optische Auffälligkeit und damit auch die Demontagegefahr.

Dabei weist der Bewegungsmelder B einen Funksender F auf, durch den ein Aktor L, beispielsweise eine Leuchte oder ein Lautsprecher, angesteuert wird. Der dargestellte erfindungsgemäße Bewegungsmelder B weist ein Gehäuse G auf, das so ausgeführt ist, dass es zur Minimierung der Einbautiefe in eine durch die Rückseite eines Installationsgerätes I bereitgestellte Aufnahme X eingesetzt ist. Hierdurch wird der vorhandene Bauraum besonders intelligent ausgenutzt und Einsatzorte für den erfindungsgemäßen Bewegungsmelder B geschaffen, die mit konventionellen Bewegungsmeldern schlichtweg mangels Einbauraum und/oder der mangelnden Vielzahl der im Außenbereich in Frage kommenden Installationsdosen D nicht in Frage kommen. Durch die Unterputz-Installation des erfindungsgemäßen Bewegungsmelders B auf der Gebäudeinnenseite WI werden potentielle Einsatzorte maximiert, insbesondere aufgrund der regelmäßig im Innenraum eines Gebäudes um ein Vielfaches häufiger vorkommende Installationsdosen D als im Außenbereich. Damit kann die Abdeckung eines zu erfassenden Gebietes durch mehrere Bewegungsmelder B zusätzlich verbessert werden, und zwar im Rahmen der bestehenden Leitungsstruktur eines Gebäudes, so dass der Abdeckungsbereich durch mehrere Bewegungsmelder B vergrößert und die Installationshürde und die Installationskosten abgesenkt werden können. Angedeutet in Figur 1 ist die Verkabelung des Bewegungsmelders B anhand des ohnehin in der Installationsdose D vorhandenen Kabelgutes V zum Anschluss an die Energieversorgung eines Gebäudes.

Die Erfindung ist anhand von einem Ausführungsbeispiel beschrieben. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen im Einzelnen erläutert werden müsste.

### Bezugszeichenliste

- B: Bewegungsmelder
- BE: Wippe
- D: Installationsdose
- F: Funksender
- G: Gehäuse
- I: elektrisches/elektronisches Installationsgerät
- L: Aktor
- R: Radarsensor
- V: Kabelgut
- W: Wand
- WA: Wandaußenseite
- WI: Wandinnenseite
- X: Aufnahme
- Y: Bewegungsereignis

## Patentansprüche

1. Anordnung umfassend eine Gebäudewand (W) mit einer Gebäudeinnenseite (WI) und einer Gebäudeaußenseite (WA), eine auf der Gebäudeinnenseite (WI) installierten Installationsdose (D) und einen Bewegungsmelder (B) umfassend ein Gehäuse (G) sowie eine Schnittstelle zum Anschluss an eine Energieversorgung eines Gebäudes, wobei der Bewegungsmelder (B) zur Detektion eines Bewegungsereignisses einen Radarsensor (R) umfasst, wobei das Bewegungsereignis ein Outdoor- Bewegungsereignis (Y) ist und der Bewegungsmelder (B) so bemessen und ausgeführt ist, dass er unterputz in einer Installationsdose (D) hinter einem elektrischen/elektronischen Installationsgerät (I) im Inneren eines Gebäudes installiert ist, so dass der Bewegungsmelder (B) außerhalb des Gebäudes unsichtbar und vor Wettereinflüssen geschützt ist, und mittels des Radarsensors (R) durch die Gebäudewand (W) hindurch eine Detektion eines Outdoor-Bewegungsereignisses (Y) auf der Seite der Gebäudeaußenwand (WA) vornimmt, **dadurch gekennzeichnet, dass** das Gehäuse (G) des Bewegungsmelders (B) so ausgeführt ist, dass es zur Minimierung der Einbautiefe in eine durch die Rückseite des Installationsgerätes (I) bereitgestellte Aufnahme (X) eingesetzt ist.

2. Anordnung (B) nach Anspruch 1, **dadurch gekennzeichnet, dass** der Bewegungsmelder (B) Fixierungselemente, insbesondere Krallen oder Federn, aufweist, die zur gleichbleibenden Lagefixierung des Bewegungsmelders (B) in der Einbaulage innerhalb der Installationsdose (D) geeignet sind.

3. Anordnung (B) nach einem der Ansprüche 1 oder 2, **dadurch gekennzeichnet, dass** der Bewegungsmelder (B) einen Funksender (F) aufweist, durch den eine Parametrierung über eine Applikation auf einem Endgerät durch einen Anwender ermöglicht wird.

4. Anordnung (B) nach einem der Ansprüche 1 bis 3, **dadurch gekennzeichnet, dass** der Bewegungsmelder (B) einen Funksender (F) aufweist, durch den ein Aktor (L), beispielsweise eine Leuchte oder ein Lautsprecher, angesteuert wird.

5. Verwendung der Anordnung nach einem der Ansprüche 1 bis 4 zur Detektion eines Outdoor-Bewegungsereignisses (Y) durch eine Gebäudewand (W) hindurch im Außenbereich, während der Bewegungsmelder (B) als Unterputz-Installation in einer im Innenbereich eines Gebäudes angeordneten Installationsdose (D) installiert ist.

## Claims

1. Arrangement comprising a building wall (W) with an interior building side (WI) and an exterior building side (WA), an installation box (D) installed on the interior side of the building (WI) and a motion detector (B) comprising a housing (G) and an interface for connection to a power supply of a building, wherein the motion detector (B) comprises a radar sensor (R) for detecting a motion event, wherein the motion event is an outdoor motion event (Y), and the motion detector (B) is dimensioned and designed such that it is installed flush-mounted in an installation box (D) behind an electrical/electronic installation device (I) inside a building, so that the motion detector (B) is invisible from outside the building and protected from the weather, and, by means of the radar sensor (R), detects an outdoor motion event (Y) on the side of the exterior wall (WA) of the building through the wall (W), **characterised in that** the housing (G) of the motion detector (B) is designed in such a way that it is inserted into a receptacle (X) provided on the rear side of the installation device (I) in order to minimise the installation depth.

2. Arrangement (B) according to claim 1, **characterised in that** the motion detector (B) has fixing elements, in particular claws or springs, which are suitable for fixing the motion detector (B) in a consistent position in the installation position within the installation box (D).

3. Arrangement (B) according to any one of claims 1 or 2, **characterised in that** the motion detector (B) has a radio transmitter (F) which enables parameterisation via an application on a terminal device by a user.

4. Arrangement (B) according to any one of claims 1 to 3, **characterised in that** the motion detector (B) has a radio transmitter (F) which controls an actuator (L), for example a light or a loudspeaker.

5. Use of the arrangement according to any one of claims 1 to 4 for detecting an outdoor motion event (Y) through a building wall (W) in the outdoor area, while the motion detector (B) is installed as a flush-mounted installation in an installation box (D) located inside the building.

## Revendications

1. Dispositif comprenant un mur de bâtiment (W) avec un côté intérieur du bâtiment (WI) et un côté extérieur du bâtiment (WA), une prise d'installation (D) installée sur la face intérieure (WI) du bâtiment et un détecteur de mouvement (B) comprenant un boîtier (G) ainsi qu'une interface pour le raccordement à une alimentation électrique d'un bâtiment, le détecteur de mouvement (B) comprenant un capteur radar (R) pour la détection d'un événement de mouvement, l'événement de mouvement étant un événement de mouvement extérieur (Y) et le détecteur de mouvement (B) est dimensionné et conçu de manière à être encastré dans une boîte d'installation (D) derrière un appareil d'installation électrique/électronique (I) à l'intérieur d'un bâtiment, de sorte que le détecteur de mouvement (B) est invisible de l'extérieur du bâtiment et protégé des intempéries, et effectue, au moyen du capteur radar (R), une détection d'un événement de mouvement extérieur (Y) du côté du mur extérieur du bâtiment (WA) à travers le mur du bâtiment (W), **caractérisé en ce que** le boîtier (G) du détecteur de mouvement (B) est conçu de manière à être inséré dans un logement (X) prévu à cet effet à l'arrière de l'appareil d'installation (I) afin de minimiser la profondeur d'encastrement.

2. Dispositif (B) selon la revendication 1, **charactérisé en ce** que le détecteur de mouvement (B) comporte des éléments de fixation, en particulier des griffes ou des ressorts, qui sont appropriés pour maintenir le détecteur de mouvement (B) dans une position fixe à l'intérieur de la boîte d'installation (D).

3. Dispositif (B) selon l'une quelconque des revendications 1 ou 2, **caractérisé en ce que** le détecteur de mouvement (B) comporte en émetteur radio (F) qui permet à un utilisateur de procéder au paramétrage via une application sur un terminal.

4. Dispositif (B) selon l'une quelconque des revendications 1 à 3, **caractérisé en ce que** le détecteur de mouvement (B) comporte en émetteur radio (F) qui commande un actionneur (L), par exemple un luminaire ou un haut-parleur.

5. Utilisation du dispositif selon l'une quelconque des revendications 1 à 4 pour détecter un événement de mouvement extérieur (Y) dans la zone extérieure à travers un mur de bâtiment (W), tandis que le détecteur de mouvement (B) est installé de façon encastré dans une boîte d'installation (D) disposée à l'intérieur d'un bâtiment.
